# EUROPÄISCHE PATENTSCHRIFT

(11) **EP 2 474 399 B1**
(45) Veröffentlichungstag und Bekanntmachung des Hinweises auf die Patenterteilung: **20.02.2019**
(21) Anmeldenummer: 11000068.4
(22) Anmeldetag: 06.01.2011
(51) Int. Cl.: B27N 3/18

(54) **Verfahren und Vorrichtung zur gezielten Beeinflussung der technologischen Eigenschaften einzelner Bereiche einer Holzwerkstoffplatte, eines vorverdichteten Holzwerkstoffvlieses oder eines Holzfaserkuchens**
Method and device for targeted influence of the technological characteristics of individual areas of a wooden board, a pre-compressed wooden fabric or a wood fibre cake
Procédé et dispositif d'influence ciblée des caractéristiques technologiques de domaines individuels d'une plaque en matière dérivée du bois, d'un tissu en matière dérivée du bois pré-étanchéifié ou d'un gâteau en fibres de bois

(43) Veröffentlichungstag der Anmeldung: 11.07.2012
(60) Teilanmeldung: 17155311.8
(73) Patentinhaber: Flooring Technologies Ltd., Kalkara SCM 1001 (MT); Cefla Deutschland GmbH, 53340 Meckenheim (DE)
(72) Erfinder: Kalwa, Norbert, 32805 Horn-Bad Meinberg (DE); Stahl, Gerhard, 53474 Bad Neuenarh-Ahrweiler (DE)
(74) Vertreter: Rehmann, Thorsten

(56) Entgegenhaltungen:
- EP-A1- 2 241 426
- WO-A1-2009/050565
- DE-A1-102007 044 315
- DE-A1-102008 049 132
- DE-B3-102008 034 749
- DE-U1- 20 002 744
- US-A1- 2003 024 199
- US-A1- 2009 217 869

## Beschreibung

Die Erfindung betrifft ein Verfahren zur gezielten Beeinflussung der technologischen Eigenschaften einzelner Bereiche einer Holzwerkstoffplatte, eines vorverdichteten Holzwerkstoffvlieses oder eines Holzfaserkuchens, sowie eine Vorrichtung zur Durchführung des Verfahrens.

An bestimmte Holzwerkstoffplatten werden teilweise die Anforderungen gestellt, dass sie gegenüber einer üblichen Standard-Holzwerkstoffplatte verbesserte technologische Eigenschaften aufweisen. Diese verbesserten technologischen Eigenschaften müssen vielfach nur partiell, also nur in einzelnen Bereichen der Holzwerkstoffplatte vorliegen. Es ist deshalb nicht notwendig, die gesamte Platte zu verändern, was oft aus Kostengründen nicht vertretbar oder auch im Herstellungsprozess der Platte gar nicht möglich ist. Ein Grund dafür kann sein, dass ein Mittel zur Modifikation bei der Plattenherstellung nicht eingesetzt werden kann, weil es z.B. den Herstellprozess nachhaltig beeinflusst oder stört. Bei den zu verändernden Eigenschaften kann es sich um elektrische Größen (Durchgangswiderstand), mechanische Festigkeiten (beispielsweise Querzugfestigkeit), hydrische Eigenschaften (Wasseraufnahme, Quellung) oder Emission handeln. Diese Beispiele sind beliebig in jede Anwendung bzw. jede damit verbundene Modifikation erweiterbar. Diese Eigenschaften können sich auf das gesamte Verarbeitungs- bzw. Anwendungsspektrum beziehen. Es muss sich nicht nur um physikalische, sondern kann sich auch um chemische Eigenschaften handeln, die aus welchen Gründen auch immer nach der Herstellung der Platte nicht den Wünschen des Verarbeiters oder des Anwenders entsprechen.

Diese Holzwerkstoffplatten werden großformatig aus beleimten und miteinander verpressten Holzspänen oder Holzfasern hergestellt. Diese großformatigen Holzwerkstoffplatten werden anschließend in einzelne Platten gewünschter Größe aufgeteilt. Zuvor können die Ober- und/oder Unterseite in irgendeiner Form beschichtet worden sein. Die aufgeteilten Platten können als Wand-, Decken- oder Fussbodenpaneele, als Möbelplatten oder beispielsweise als Schalungsplatten verwendet und hierzu besonders weiterbearbeitet werden. Üblicherweise ist dem Hersteller bzw. dem Verarbeiter der großformatigen Holzwerkstoffplatte bekannt, welche Formate aus einer Standardplatte im Rahmen der Weiterverarbeitung hergestellt werden. Der Grund hierfür liegt darin, dass entweder der Hersteller selbst die Veredelung betreibt oder dass ein enger Kontakt zwischen Plattenhersteller und Weiterverarbeiter besteht. Es hat sich gezeigt, dass die Modifikationen der technologischen Eigenschaften in der Regel im Randbereich von Zuschnitten oder Rohfixmaßen benötigt werden. Ein Problem ist hier allenfalls in einer benötigten Variabilität zu sehen, die für die unterschiedlichen Formate gebraucht wird. Dies lässt sich durch eine möglichst flexible Methode zur Behandlung der Holzwerkstoffplatten lösen. Wenn dies gewährleistet ist, ist der Weg für die gezielte Veränderung von Eigenschaften in diesen definierten Bereichen leicht durchzuführen.

Aus der DE 10 2008 034 749 B3 ist eine Holzwerkstoffplatte bekannt, deren Festigkeit im Randbereich gegenüber dem Innenbereich erhöht ist.

Aus der DE 10 2008 049 132 A1 ist ein Verfahren zum Herstellen einer Holzfaserplatte bekannt, bei dem zunächst ein Faservlies zu einer Roh-Holzfaserplatte verpresst wird, anschließend eine wässrige Flüssigkeit auf Teile einer ersten Seite der Roh-Holzfaserplatte aufgebracht werden und anschließend auf der der erste Seite gegenüberliegenden zweiten Seite ein Unterdruck zumindest an Teilen der der ersten Seite gegenüberliegenden zweiten Seite angelegt wird, so dass die wässrige Flüssigkeit in und/oder durch die Roh-Holzfaserplatte gesaugt wird. Das Aufbringen der wässrigen Flüssigkeit und das Anlegen des Unterdruckes kann nach dem Pressen, insbesondere nach einem Heißpressen, erfolgen.

In der nicht vorveröffentlichten europäischen Patentanmeldung 09005468.5-1253 ist beschrieben, dass zur Herstellung einer Holzwerkstoffplatte der aus beleimten Holzspänen oder Holzfasern gestreute Kuchen auf einem Förderband hinter einer Vorpresse und vor der Heißpresse einem Vakuum ausgesetzt wird und gleichzeitig ein Vergütungsmedium auf den Kuchen aufgetragen wird, das sich in Folge des Vakuums im Kuchen verteilt, und dass das Vergütungsmedium beim anschließenden Verpressen in der Heißpresse vernetzt wird. Das Vakuum wird unterhalb des Kuchens angelegt und das Vergütungsmedium von oben aufgetragen.

Aus der DE 10 2007 044 315 A1 ist eine Vorrichtung zur Vergütung von Holzwerkstoffplatten bekannt, die eine Aufnahme mit einer Auflagerfläche zum Auflagern einer Holzwerkstoffplatte besitzt, und eine Saugeinrichtung zum Aufbringen eines Unterdrucks auf eine Oberfläche der Holzwerkstoffplatte aufweist, die auf der Auflagerfläche liegt. Die Saugeinrichtung umfasst mehrere Saugleisten, die zumindest abschnittsweise geradlinig verlaufen, an ihrer der Auflagerfläche zugewandten Seite Dichtungen besitzen und so ausgebildet sind, dass sie mit einer auf der Auflagerfläche aufliegenden Holzwerkstoffplatte einen evakuierbaren Saugraum bilden, der eine der Holzwerkstoffplatte zugewandte Saugfläche besitzt.

Bei den zuvor erläuterten Verfahren ist man auf den maximal zur Verfügung stehenden Unterdruck beschränkt. Durch die schwierige Abdichtung des Systems ist die Effektivität zur gezielten Beeinflussung der technologischen Eigenschaften gering.

Von dieser Problemstellung ausgehend soll ein Verfahren angegeben werden, mit dem die technologischen Eigenschaften einzelner Bereiche einer Holzwerkstoffplatte gezielt beeinflusst werden können, sowie eine Vorrichtung zu schaffen, mit der das Verfahren ausführbar ist.

Zur Problemlösung wird ein Verfahren mit folgenden Schritten vorgeschlagen:
a) Fixierung der Holzwerkstoffplatte oder eines vorverdichteten Holzwerkstoffvlieses oder eines Holzfaserkuchens auf einem Arbeitstisch,
b) Anlegen mindestens eines Auftragsaggregates an die Oberseite und/oder die Unterseite der Holzwerkstoffplatte, des Holzwerkstoffvlieses oder des Holzfaserkuchens,
c) gezieltes Bewegen des mindestens einen Auftragsaggregats auf der Oberseite und/oder der Unterseite und Einpressen eines Vergütungsmediums in partielle Bereiche der Holzwerkstoffplatte, des Holzwerkstoffvlieses oder des Holzfaserkuchens in einer vorgegebenen Menge und unter einem vorgegebenen Druck,
d) gegebenenfalls anschließendes Verpressen des vorverdichteten Holzwerkstoffvlieses oder des Holzfaserkuchens zu einer Holzwerkstoffplatte gewünschter Stärke.

Mit diesem Verfahren und durch eine kombinierte Auftrags- und Druckimprägnierungsvorrichtung können an beliebigen Stellen von großformatigen Platten partielle Behandlungen in der Oberfläche oder dem gesamte Plattenquerschnitt durchgeführt werden. Unter dem Begriff Vergütungsmedium sind solche Medien zu verstehen, die die physikalischen oder chemischen Eigenschaften der Holzwerkstoffplatte beeinflussen. Sie können flüssig oder gasförmig sein. Sie können nachträglich vernetzen oder sich in sonstiger Weise mit dem Holzwerkstoff, den Fasern oder den Spänen verbinden. Das Vergütungsmedium kann in unterschiedlichen Konzentrationen vorliegen. Der Druck, mit dem das Vergütungsmedium durch den Holzwerkstoff gedrückt wird, kann frei gewählt werden. Es ist lediglich darauf zu achten, dass der Werkstoff keinen Schaden nimmt. Die Druckerhöhung führt in jedem Fall zu einer Verringerung der Zeit, die notwendig ist, bis das Vergütungsmedium durch den Holzwerkstoff gedrückt ist. Aus wirtschaftlichen Gründen kann der applizierte Druck nach oben hin beschränkt werden.

Vorzugsweise ist das mindestens eine Auftragsaggregat gegenüber der Oberseite und/oder Unterseite der Holzwerkstoffplatte, des Holzwerkstoffvlieses oder des Holzfaserkuchens abgedichtet. Das Vergütungsmedium kann unter Druck stehend mittels mindestens einer Auftragsdüse auf die Oberseite und/oder Unterseite der Holzwerkstoffplatte, des Holzwerkstoffvlieses oder des Holzfaserkuchens aufgesprüht werden und dann in die Holzwerkstoffplatte, das Holzwerkstoffvlies oder den Holzfaserkuchen eindringen.

Das Vergütungsmedium kann aber auch mittels mindestens einer von einem Gehäuse umgebenen Auftragsdüse auf die Oberseite und/oder Unterseite der Holzwerkstoffplatte, des Holzwerkstoffvlieses oder des Holzfaserkuchens aufgebracht werden, wobei das Gehäuse dichtend auf der Oberseite und/oder der Unterseite der Holzwerkstoffplatte, des Holzwerkstoffvlieses oder des Holzfaserkuchens aufliegt und das Gehäuse unter Überdruck gesetzt wird und dabei das Vergütungsmedium dann in die Holzwerkstoffplatte, das Holzwerkstoffvlies oder den Holzfaserkuchen eindringt. Das Vergütungsmedium kann dabei zunächst im Wesentlichen drucklos aufgetragen und dann erst der Druck innerhalb des Gehäuses erhöht werden. Es ist aber auch ebenso denkbar, das Gehäuse unter Druck zu setzen und dann das Vergütungsmedium aufzusprühen.

Insbesondere wenn als Vergütungsmedium Isocyanate verwendet werden, ist es vorteilhaft, wenn zumindest die Unterseite der Holzwerkstoffplatte nach dem Einpressen des Vergütungsmediums bzw. nach dem Verpressen des vergüteten vorverdichteten Holzwerkstoffvlieses oder Holzfaserkuchens gereinigt wird.

Aus Gründen des Umweltschutzes und der Reduzierung der Herstellkosten ist es vorteilhaft, wenn auf der Unterseite des Holzwerkstoffvlieses oder des Holzfaserkuchens austretendes Vergütungsmedium aufgefangen und abgeführt wird. Das abgeführte Vergütungsmedium kann dann wiederverwendet werden.

Das Auffangen und Abführen des Vergütungsmediums erfolgt vorzugsweise mittels einer Lochplatte oder eines Siebes.

Die Vorrichtung zur gezielten Beeinflussung der technologischen Eigenschaften einzelner Bereiche einer Holzwerkstoffplatte zeichnet sich in einer ersten Ausführung durch folgende Merkmale aus:
a) einem Arbeitstisch, auf den eine Holzwerkstoffplatte, ein vorverdichtetes Holzwerkstoffvlies oder ein Holzfaserkuchen auflegbar und fixierbar ist,
b) einem gezielt bewegbaren Auftragsaggregat mit:
   i) einem Gehäuse, das gegenüber der Oberfläche der Holzwerkstoffplatte, des Holzwerkstoffvlieses oder des Holzfaserkuchens abdichtbar ist,
   ii) mindestens einer im Gehäuse angeordneten Auftragsdüse zum Aufbringen eines Vergütungsmediums auf die Oberfläche,
   iii) einem Druckerzeuger zur Erzeugung eines Überdrucks mittels dessen das Vergütungsmedium in die Holzwerkstoffplatte, das Holzwerkstoffvlies oder den Holzfaserkuchen
      hineinpressbar ist,
c) gegebenenfalls einer Druckpresse zum Verpressen des Holzwerkstoffvlieses oder des Holzfaserkuchens zu einer Holzwerkstoffplatte gewünschter Stärke,

Vorzugsweise weist das Gehäuse an seinem der Oberfläche der Holzwerkstoffplatte, des Holzwerkstoffvlieses oder des Holzfaserkuchens zugewandten Rand eine Dichtung auf.

Vorteilhaft ist es, wenn am Arbeitstisch eine Einrichtung vorgesehen ist, die das Holzwerkstoffvlies oder den Holzfaserkuchen seitlich abstützt.

Der Druckerzeuger kann vor der mindestens einen Auftragsdüse angeordnet sein und das Vergütungsmedium mit Überdruck durch die Auftragsdüse pressen.

Es kann aber auch über den Druckerzeuger in dem auf der Oberfläche der Holzwerkstoffplatte, des Holzwerkstoffvlieses oder des Holzfaserkuchens dichtend aufliegenden Gehäuse Druck erhöhbar sein.

Um nahezu ein beliebiges Muster von behandelten Zonen auf der Oberfläche erzeugen zu können, ist das Auftragsaggregat vorzugsweise an einem in mindestens zwei Freiheitsgraden über den Arbeitstisch führbaren Arm angeordnet.

Das Gehäuse des Auftragsaggregats ist vorzugsweise glockenförmig ausgebildet.

Mit Hilfe einer Zeichnung sollen Ausführungsbeispiele der Erfindung näher beschrieben werden.

Es zeigt:

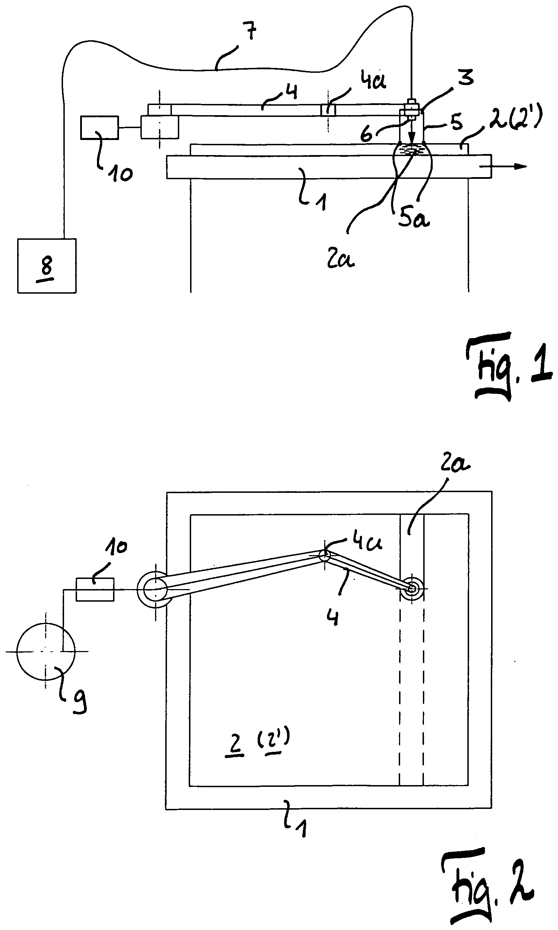

- Figur 1 -: die schematische Seitenansicht einer ersten Vorrichtung zur gezielten Beeinflussung der technologischen Eigenschaften einzelner Bereiche einer Holzwerkstoffplatte;
- Figur 2 -: die Draufsicht auf die Vorrichtung nach Figur 1;
- Figur 3 -: die schematische Seitenansicht einer weiteren Vorrichtung zur gezielten Beeinflussung der technologischen Eigenschaften einzelner Bereiche einer Holzwerkstoffplatte;

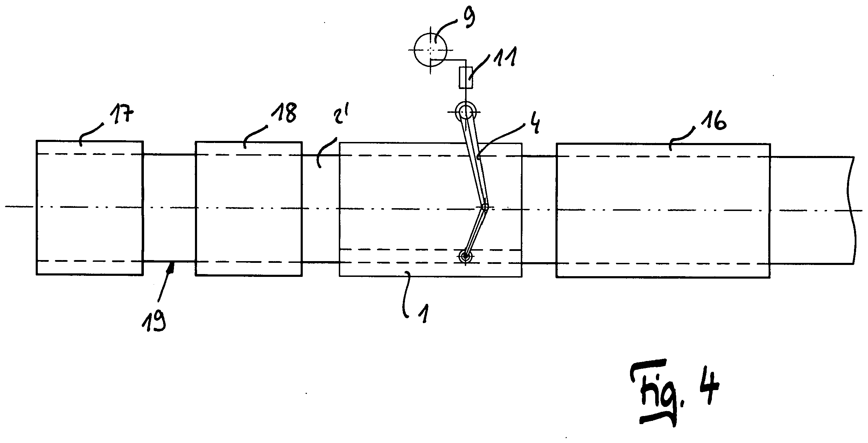

- Figur 4 -: die schematische Draufsicht auf eine Anlage zur Behandlung eines Holzwerkstoffvlieses oder einer Holzwerkstoffplatte in einer ersten Ausführungsform;
- Figur 5 -: die schematische Draufsicht auf eine Anlage zur Behandlung eines Holzwerkstoffvlieses oder einer Holzwerkstoffplatte in einer zweiten Ausführungsform.

Die erfindungsgemäße Vorrichtung besteht aus dem Arbeitstisch 1, auf dem eine Holzwerkstoffplatte 2, ein vorverdichtetes Holzwerkstoffvlies 2' oder ein zumindest teilweise vorverdichteter Holzfaserkuchen 2' aufgelegt und fixiert werden kann, und dem Auftragsaggregat 3, das über einen Arm 4 in zwei Freiheitsgraden über den Arbeitstisch 1 bewegbar ist. Werden ein Holzwerkstoffvlies 2' oder ein Holzfaserkuchen 2' behandelt, umfasst die erfindungsgemäße Vorrichtung weiterhin eine Hochdruckpresse 16, in der nach der Vergütung das Vlies aus mit einem Leim in bekannter Weise beleimten Spänen bzw. der Kuchen aus in bekannter Weise beleimten Fasern unter hohem Druck und hoher Temperatur zu einer Holzwerkstoffplatte 2 gewünschter Stärke verpresst werden. Bei der Hochdruckpresse 16 kann es sich um eine übliche Ein- oder Mehretagenpresse oder eine Contipresse handeln. Der Holzwerkstoff bzw. die Holzfasern werden in der Streuvorrichtung 17 zunächst auf ein endlos umlaufendes Förderband 19 mittels einer Streuvorrichtung 17 aufgestreut und dann in einer Presse 18 zu einem Vlies bzw. Kuchen 2' vorverdichtet. Aus Gründen der Vereinfachung wird in der nachfolgenden Beschreibung für das in seinen technologischen Eigenschaften zu beeinflussende Material nur noch der Begriff Holzwerkstoffplatte 2 benutzt.

Das Auftragsaggregat 3 besteht aus dem glockenförmigen Gehäuse 5 und der im Inneren des Gehäuses 5 angeordneten mindestens einen Düse 6, die über einen Schlauch 7 mit einer Förderpumpe 8 verbunden ist, die aus einem Behälter 9 Vergütungsflüssigkeit fördert. Der Arm 4 besteht aus zwei Teilen, die über ein Gelenk 4a miteinander verbunden sind. Der Arm 4 ist Teil eines hier nicht näher dargestellten computergesteuerten Roboters 10.

Am unteren Rand des Gehäuses 5 ist eine Dichtung 5a vorgesehen, die auf der Oberfläche der Holzwerkstoffplatte 2 aufliegt und im Zusammenwirken mit der Holzwerkstoffplatte 2 das Innere des Gehäuses 5 gegen die Umwelt abdichtet. Über die Förderpumpe 8 kann eine Vergütungsflüssigkeit aus dem Vorratsbehälter 9 herausgesaugt und mit Überdruck über die Düse 6 auf die Oberseite der Holzwerkstoffplatte 2 aufgesprüht werden und dringt dann in Folge des Druckes in das Innere der Holzwerkstoffplatte 2 ein. Hierzu kann ein nicht näher dargestelltes Druckaggregat vorgesehen sein, das beispielsweise auch in die Förderpumpe 8 integriert sein kann. Das Auftragsaggregat 3 wird mittels des Armes 4 in beliebigen Bahnkurven über die Holzwerkstoffplatte 2 geführt, so dass sich in Folge der in die Holzwerkstoffplatte 2 eingedrungenen Vergütungsflüssigkeit ein zumindest in seinen technologischen Eigenschaften gegenüber der übrigen Holzwerkstoffplatte 2 vergüteter Bereich 2a einstellt. Die Abdichtung des Gehäuses 5 gegenüber der Holzwerkstoffplatte 2 ist bei diesem Ausführungsbeispiel nicht zwingend notwendig, bietet aber den Vorteil, dass das Vergütungsmedium nicht aus dem Gehäuse 5 herausspritzt.

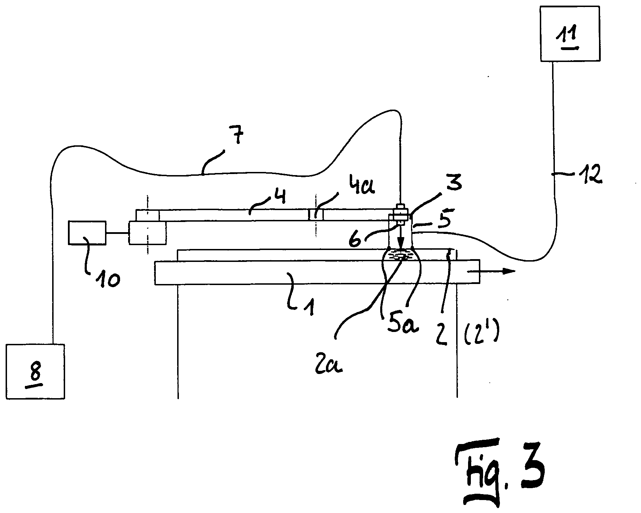

Zwingend hingegen ist die Abdichtung des Gehäuses 5 in dem in Figur 3 dargestellten Ausführungsbeispiel.

Über ein Druckaggregat 11, das über einen Schlauch 12 mit dem Inneren des Gehäuses 5 verbunden ist, kann Überdruck im Gehäuse 5 aufgebaut werden, nachdem über die Düse 6 das Vergütungsmedium auf die Oberseite der Holzwerkstoffplatte 2 aufgesprüht wurde. Durch den im Inneren des Gehäuses 5 aufgebauten Überdruck wird dann die Vergütungsflüssigkeit in das Innere der Holzwerkstoffplatte 2 gepresst. Es ist ebenso denkbar, dass der Überdruck im Gehäuse 5 aufgebaut wird, bevor über die Förderpumpe 8 Vergütungsflüssigkeit aufgesprüht wird. Der Förderdruck der Förderpumpe 8 muss dann entsprechend höher sein. Über das Druckaggregat 11 können Umgebungsluft oder anderes Gas allein oder zusammen mit einer Vergütungsflüssigkeit in die Holzwerkstoffplatte 2 gepresst werden. Über den Druck ist eine genaue Dosierung der Zubereitung, die in die Platte 2 gebracht werden soll, möglich.

Wie zuvor beschrieben, können sowohl die Oberseite als auch die Unterseite der Holzwerkstoffplatte behandelt werden. Dies kann gleichzeitig oder in Schritten erfolgen. Die Art der Behandlung (Menge pro Quadratmeter, Breite und Tiefe) wird dabei im Wesentlichen durch die Auftragsmenge des Vergütungsmediums, die Vorschubgeschwindigkeit des Auftragaggregats 3 und die Breite der Abdichtung 5a bzw. dem Innenumfang des Gehäuses 5 vorgegeben. Je nach Bedarf kann dies im Produkt oder im Prozess beliebig variiert werden. Selbstverständlich ist bei diesem Verfahren die Einsparung von Produktionsmitteln ein wesentlicher Punkt.

Die Auftragsmenge kann je nach Bedarf in einem weiten Bereich variiert werden. Dies hängt stark von der Plattendicke und der Art der gewünschten Behandlung ab (oberflächliche, partielle oder vollständige Imprägnierung). Sie kann bei wenigen Gramm beginnen und bis zu 1-2 kg/m² betragen. Ein besonderer Vorteil des Verfahrens ist, dass bei der Imprägnierung/Behandlung der Platten die Auftragsmengen in den Auftragsbahnen beliebig variiert werden können. Es können also später bei Zuschnitten oder Fertigprodukten an den verschiedenen Kanten unterschiedlich starke Ausprägungen von Eigenschaften erreicht werden. Die Erzeugung von bestimmten gewünschten Eigenschaften bei Holzwerkstoffplatten im Oberflächen- oder Randbereich hat schon immer eine große Rolle bei der Herstellung und Weiterbearbeitung von Platten gespielt. Beispiele hierfür sind die gezielte Verbesserung der Geschlossenheit der Platten für Postforming-Anwendungen, um das Problem der unruhigen Kante besser in den Griff zu kriegen, die gezielte Behandlung von Plattenkanten oder Profilen mit Mitteln zur Hydrophobierung oder die Erzeugung einer besseren Leitfähigkeit von profilierten Platten zur anschließenden Pulverlackierung.

Zur besseren Sichtbarmachung der Güte der Behandlung können dabei die verwendeten Medien eingefärbt werden. Dies ist die einfachste Möglichkeit der Kontrolle der Imprägnierung. Andere Möglichkeiten können bei Bedarf selbstverständlich gewählt werden. Beispielsweise kann die Kontrolle über Sensoren detektiert werden.

Anstelle des glockenförmigen Gehäuses 5 kann auch ein vollständiger Rahmen 13 verwendet werden, der auf die Oberseite der Holzwerkstoffplatte 2 gepresst wird.

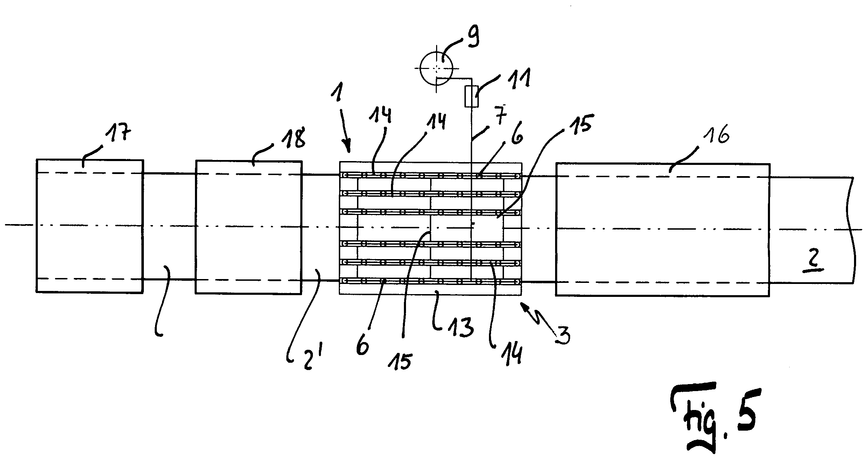

Im Rahmen 13 sind eine Mehrzahl von Auftragsdüsen 6 vorgesehen, die zu mehreren hintereinander an jeweils einer Leiste befestigt sind. Wie Figur 5 zeigt, sind mehrere Leisten 14 zueinander parallel beabstandet vorgesehen und über Verbindungsstege 15 miteinander verbunden. Vorteilhaft ist es, einen solchen Rahmen 13 als Auftragsaggregat 3 zur Behandlung eines vorverdichteten Holzwerkstoffvlieses 2' bzw. eines Holzfaserkuchens 2' zu verwenden. Hierzu ist dann vorgesehen, dass innerhalb des Arbeitstisches 1 eine Abstützeinrichtung vorgesehen ist, die auf die Unterseite des Holzwerkstoffvlieses 2' oder des Holzfaserkuchens 2' einwirkt, wenn der Rahmen 13 auf die Oberseite aufgepresst wird.

Um das an der Unterseite des Holzwerkstoffvlieses 2' oder des Holzfaserkuchens 2' austretende Vergütungsmedium auffangen und abführen zu können, ist innerhalb des Arbeitstisches 1 ein Lochblech oder Sieb angeordnet. Dieses Lochblech oder Sieb kann auch als Abstützeinrichtung dienen. Vorteilhaft ist es, wenn auch seitlich eine Einrichtung zum Abstützen des Holzwerkstoffvlieses 2' oder des Holzfaserkuchens 2' am Arbeitstisch 1 vorgesehen ist. Ein Rahmen 13 mit einer Vielzahl von Düsen 6 hat gegenüber einem Gehäuse 5 den Vorteil, dass schnell in einem einzigen Arbeitsgang eine Vielzahl unterschiedlicher Bereiche vergütet werden können. Um entsprechend flexibel zu sein, ist die Anzahl der Auftragsdüsen 6 entsprechend hoch zu wählen. Die Auswahl der zu vergütenden Bereiche wird dann dadurch getroffen, dass nur einzelne Auftragsdüsen 6 aktiviert werden.

### Bezugszeichenliste

- 1: Arbeitstisch
- 2: Holzwerkstoffplatte
- 2': Holzwerkstoffvlies, Holzfaserkuchen
- 2a: vergüteter Bereich
- 3: Auftragsaggregat
- 4: Arm
- 4a: Gelenk
- 5: Gehäuse
- 6: Auftragsdüse
- 7: Schlauch
- 8: Förderpumpe
- 9: Vorratsbehälter
- 10: computergesteuerter Roboter
- 11: Druckerzeuger
- 12: Schlauch
- 13: Rahmen
- 14: Leiste
- 15: Verbindungsstege
- 16: Druckpresse
- 17: Streuvorrichtung
- 18: Presse
- 19: Zuführleitung

## Patentansprüche

1. Verfahren zur gezielten Beeinflussung der technologischen Eigenschaften einzelner Bereiche (2a) einer Holzwerkstoffplatte (2) mit folgenden Schritten:
a) Fixierung der Holzwerkstoffplatte (2) oder eines vorverdichteten Holzwerkstoffvlieses (2') oder eines Holzfaserkuchens (2') auf einem Arbeitstisch (1),
b) Anlegen mindestens eines Auftragsaggregates (3) an die Oberseite und/oder die Unterseite der Holzwerkstoffplatte (2), des Holzwerkstoffvlieses (2') oder des Holzfaserkuchens (2'),
c) gezieltes Bewegen des mindestens einen Auftragsaggregats (3) auf der Oberseite und/oder der Unterseite und Einpressen eines Vergütungsmediums in partielle Bereiche der Holzwerkstoffplatte (2), des Holzwerkstoffvlieses (2') oder des Holzfaserkuchens (2') in einer vorgegebenen Menge und unter einem vorgegebenen Druck,
d) gegebenenfalls anschließendes Verpressen des vorverdichteten Holzwerkstoffvlieses (2') oder des Holzfaserkuchens (2') zu einer Holzwerkstoffplatte (2) gewünschter Stärke.

2. Verfahren nach Anspruch 1, **dadurch gekennzeichnet, dass** das mindestens eine Auftragsaggregat (3) gegenüber der Oberseite und/oder der Unterseite der Holzwerkstoffplatte (2), des Holzwerkstoffvlieses (2') oder des Holzfaserkuchens (2') abgedichtet wird.

3. Verfahren nach Anspruch 1, **dadurch gekennzeichnet, dass** das mindestens eine Auftragsaggregat (3) in beliebigen Bahnformen über die Oberseite und/oder Unterseite geführt wird.

4. Verfahren nach Anspruch 2, **dadurch gekennzeichnet, dass** das Vergütungsmedium unter Druck stehend mittels mindestens einer Auftragsdüse (6) auf die Oberseite und/oder Unterseite der Holzwerkstoffplatte (2), des Holzwerkstoffvlieses (2') oder des Holzfaserkuchens (2') aufgesprüht wird und in die Holzwerkstoffplatte (2), das Holzwerkstoffvlies (2') oder den Holzfaserkuchen (2') eindringt.

5. Verfahren nach Anspruch 2, **dadurch gekennzeichnet, dass** das Vergütungsmedium mittels mindestens einer von einem Gehäuse (5) umgebenden Auftragsdüse (6) auf die Oberseite und/oder Unterseite der Holzwerkstoffplatte (2), des Holzwerkstoffvlieses (2') oder des Holzfaserkuchens (2') aufgebracht wird, dass das Gehäuse (5) dichtend auf der Oberseite und/oder der Unterseite der Holzwerkstoffplatte (2), dem Holzwerkstoffvlies oder dem Holzfaserkuchen (2') aufliegt und Überdruck in das Gehäuse (5) eingebracht wird und dabei das Vergütungsmedium in die Holzwerkstoffplatte (2), das Holzwerkstoffvlies (2') oder den Holzfaserkuchen (2') eindringt.

6. Verfahren nach Anspruch 4 oder 5, **dadurch gekennzeichnet, dass** die teilweise vergütete Holzwerkstoffplatte (2) in einzelne rechteckige Einzelplatten aufgeteilt wird.

7. Verfahren nach Anspruch 4, **dadurch gekennzeichnet, dass** auf die Oberseite des Holzwerkstoffvlieses (2') oder des Holzfaserkuchens (2') ein Rahmen (13) aufgepresst wird, in dem eine Mehrzahl von Auftragsdüsen (6) angeordnet ist.

8. Verfahren nach Anspruch 7, **dadurch gekennzeichnet, dass** die Mehrzahl von Auftragsdüsen (6) an einer Mehrzahl von parallel zueinander angeordneten Leisten (14) vorgesehen ist.

9. Verfahren nach Anspruch 7, **dadurch gekennzeichnet, dass** das Holzwerkstoffvlies (2') oder der Holzfaserkuchen (2') an seiner Unterseite unterstützt wird, wenn der Rahmen (13) auf die Oberseite aufgepresst wird.

10. Verfahren nach einem der Ansprüche 7 bis 9, **dadurch gekennzeichnet, dass** auf der Unterseite des Holzwerkstoffvlieses (2') oder des Holzfaserkuchens (2') austretendes Vergütungsmedium aufgefangen und abgeführt wird.

11. Verfahren nach Anspruch 10, **dadurch gekennzeichnet, dass** das Vergütungsmedium mittels einer Lochplatte oder eines Siebes aufgefangen und abgeführt wird.

12. Verfahren nach einem der vorstehenden Ansprüche, **dadurch gekennzeichnet, dass** zumindest die Unterseite der Holzwerkstoffplatte (2) nach dem Einpressen des Vergütungsmediums gereinigt wird.

13. Vorrichtung zur gezielten Beeinflussung der technologischen Eigenschaften einzelner Bereiche einer Holzwerkstoffplatte (2) mit folgenden Merkmalen:
a) einem Arbeitstisch (1), auf den eine Holzwerkstoffplatte (2), ein vorverdichtetes Holzwerkstoffvlies (2') oder ein Holzfaserkuchen (2') auflegbar und fixierbar ist,
b) einem gezielt bewegbaren Auftragsaggregat (3) mit:
i) einem Gehäuse (5), das gegenüber der Oberfläche der Holzwerkstoffplatte (2), des Holzwerkstoffvlieses (2') oder des Holzfaserkuchens (2') abdichtbar ist,
ii) mindestens einer im Gehäuse (5) angeordneten Auftragsdüse (6) zum Aufbringen eines Vergütungsmediums auf die Oberfläche,
iii) einem Druckerzeuger (11) zur Erzeugung eines Überdrucks, mittels dessen das Vergütungsmedium in die Holzwerkstoffplatte (2), das Holzwerkstoffvlies (2') oder den Holzfaserkuchen (2') hineinpressbar ist,
c) gegebenenfalls einer Druckpresse zum Verpressen des Holzwerkstoffvlieses (2') oder des Holzfaserkuchens (2') zu einer Holzwerkstoffplatte (2) gewünschter Stärke.

14. Vorrichtung nach Anspruch 13, **dadurch gekennzeichnet, dass** das Gehäuse (5) an seinem der Oberfläche der Holzwerkstoffplatte (2), dem Holzwerkstoffvlies (2') oder dem Holzfaserkuchen (2') zugewandten Rand eine Dichtung (5a) aufweist.

15. Vorrichtung nach Anspruch 13 oder 14, **dadurch gekennzeichnet, dass** der Druckerzeuger (8) vor der Auftragsdüse (6) angeordnet ist und das Vergütungsmedium mit Überdruck durch die Auftragsdüse (6) strömt.

16. Vorrichtung nach Anspruch 13 oder 14, **dadurch gekennzeichnet, dass** über den Druckerzeuger (11) in dem auf der Holzwerkstoffplatte (2), des Holzwerkstoffvlieses (2') oder des Holzfaserkuchens (2') dichtend aufliegenden Gehäuse (5) der Druck erhöhbar ist.

17. Vorrichtung nach Anspruch 13, **dadurch gekennzeichnet, dass** das Auftragsaggregat (6) an einem in mindestens zwei Freiheitsgraden über den Arbeitstisch (1) führbaren Arm (4) angeordnet ist.

18. Vorrichtung nach Anspruch 13, **dadurch gekennzeichnet, dass** das Gehäuse (5) glockenförmig ist.

## Claims

1. Method for purposefully influencing the technological properties of individual regions (2a) of a wood-based board (2), comprising the following steps:
a) fixing of the wood-based board (2) or of a pre-compacted wood-based fabric (2') or of a wood fibre cake (2') on a workbench (1),
b) placement of at least one applicator unit (3) onto the top side and/or the bottom side of the wood-based board (2), of the wood-based fabric (2') or of the wood fibre cake (2'),
c) purposeful movement of the at least one applicator unit (3) on the top side and/or the bottom side and pressing of a modifying medium into partial regions of the wood-based board (2), of the wood-based fabric (2') or of the wood fibre cake (2') in a prespecified quantity and under a prespecified pressure,
d) where appropriate, subsequent compression of the pre-compacted wood-based fabric (2') or of the wood fibre cake (2') into a wood-based board (2) of desired thickness.

2. Method according to Claim 1, **characterized in that** the at least one applicator unit (3) is sealed off from the top side and/or bottom side of the wood-based board (2), of the wood-based fabric (2') or of the wood fibre cake (2').

3. Method according to Claim 1, **characterized in that** the at least one applicator unit (3) is guided in any chosen path curves over the top side and/or bottom side.

4. Method according to Claim 2, **characterized in that** the modifying medium is sprayed under pressure, by means of at least one application nozzle (6), onto the top side and/or bottom side of the wood-based board (2), of the wood-based fabric (2') or of the wood fibre cake (2') and penetrates into the wood-based board (2), the wood-based fabric (2') or the wood fibre cake (2').

5. Method according to Claim 2, **characterized in that** the modifying medium is applied to the top side and/or bottom side of the wood-based board (2), of the wood-based fabric (2') or of the wood fibre cake (2') by means of at least one application nozzle (6) surrounding by a housing (5), **in that** the housing (5) rests sealingly on the top side and/or the bottom side of the wood-based board (2), of the wood-based fabric or of the wood fibre cake (2'), and positive pressure is introduced into the housing (5), and the modifying medium hereupon penetrates into the wood-based board (2), the wood-based fabric (2') or the wood fibre cake (2').

6. Method according to Claim 4 or 5, **characterized in that** the partially modified wood-based board (2) is divided up into individual rectangular single boards.

7. Method according to Claim 4, **characterized in that** onto the top side of the wood-based fabric (2') or of the wood fibre cake (2') is pressed a frame (13), in which a plurality of application nozzles (6) is disposed.

8. Method according to Claim 7, **characterized in that** the plurality of application nozzles (6) is provided on a plurality of bars (14) arranged parallel to one another.

9. Method according to Claim 7, **characterized in that** the wood-based fabric (2') or the wood fibre cake (2') is supported on its bottom side when the frame (13) is pressed onto the bottom side.

10. Method according to one of Claims 7 to 9, **characterized in that** modifying medium escaping on the bottom side of the wood-based fabric (2') or of the wood fibre cake (2') is collected and removed.

11. Method according to Claim 10, **characterized in that** the modifying medium is collected and removed by means of a perforated plate or a screen.

12. Method according to one of the preceding claims, **characterized in that** at least the bottom side of the wood-based material board (2), after the modifying medium has been pressed in, is cleaned.

13. Device for purposefully influencing the technological properties of individual regions of a wood-based board (2), having the following features:
a) a workbench (1), onto which a wood-based board (2), a pre-compacted wood-based fabric (2') or a wood fibre cake (2') is placeable and fixable,
b) a purposefully movable applicator unit (3), comprising:
i) a housing (5), which can be sealed off from the surface of the wood-based board (2), of the wood-based fabric (2') or of the wood fibre cake (2'),
ii) at least one application nozzle (6), disposed in the housing (5), for applying a modifying medium to the surface,
iii) a pressure generator (11) for generating a positive pressure by means of which the modifying medium can be pressed into the wood-based board (2), the wood-based fabric (2') or the wood fibre cake (2'),
c) where appropriate, a compression press for compressing the wood-based fabric (2') or the wood fibre cake (2') into a wood-based board (2) of desired thickness.

14. Device according to Claim 13, **characterized in that** the housing (5) has a seal (5a) on its periphery facing the surface of the wood-based board (2), of the wood-based fabric (2') or of the wood fibre cake (2').

15. Device according to Claim 13 or 14, **characterized in that** the pressure generator (8) is disposed in front of the application nozzle (6), and the modifying medium flows with positive pressure through the application nozzle (6).

16. Device according to Claim 13 or 14, **characterized in that**, by way of the pressure generator (11) in the housing (5) resting sealingly on the wood-based board (2), of the wood-based fabric (2') or of the wood fibre cake (2'), the pressure is increasable.

17. Device according to Claim 13, **characterized in that** the applicator unit (6) is disposed on an arm (4) which is guidable in at least two degrees of freedom over the workbench (1).

18. Device according to Claim 13, **characterized in that** the housing (5) is bell-shaped.

## Revendications

1. Procédé pour influencer de façon ciblée les propriétés technologiques de zones individuelles (2a) d'un panneau en matériau à base de bois (2), comprenant les étapes suivantes consistant à :
a) fixer le panneau en matériau à base de bois (2) ou une nappe en matériau à base de bois (2') pré-compactée ou un gâteau en fibres de bois (2') sur une table de travail (1),
b) poser au moins un appareil d'application (3) sur la face supérieure et/ou sur la face inférieure du panneau en matériau à base de bois (2), de la nappe en matériau à base de bois (2') ou du gâteau de fibres de bois (2'),
c) mouvoir de façon ciblée ledit au moins un appareil d'application (3) sur la face supérieure et/ou sur la face inférieure et intégrer sous pression un milieu de traitement dans des zones partielles du panneau en matériau à base de bois (2), de la nappe en matériau à base de bois (2') ou du gâteau en fibres de bois (2') en une quantité donnée et sous une pression donnée,
d) ensuite le cas échéant presser la nappe en matériau à base de bois (2') pré-compactée ou le gâteau en fibres de bois (2') pour donner un panneau en matériau à base de bois (2) d'une épaisseur désirée.

2. Procédé selon la revendication 1,
**caractérisé en ce que**
ledit au moins un appareil d'application (3) est étanché par rapport à la face supérieure et/ou à la face inférieure du panneau en matériau à base de bois (2), de la nappe en matériau à base de bois (2') ou du gâteau en fibres de bois (2').

3. Procédé selon la revendication 1,
**caractérisé en ce que**
ledit au moins un appareil d'application (3) est guidé en forme de trajectoires quelconques par-dessus la face supérieure et/ou la face inférieure.

4. Procédé selon la revendication 2,
**caractérisé en ce que**
le milieu de traitement est projeté sur la face supérieure et/ou sur la face inférieure du panneau en matériau à base de bois (2), de la nappe en matériau à base de bois (2') ou du gâteau en fibres de bois (2'), en étant sous pression au moyen d'au moins une buse d'application (6), et il pénètre dans le panneau en matériau à base de bois (2), dans la nappe en matériau à base de bois (2') ou dans le gâteau en fibres de bois (2').

5. Procédé selon la revendication 2,
**caractérisé en ce que**
le milieu de traitement est appliqué sur la face supérieure et/ou sur la face inférieure du panneau en matériau à base de bois (2), de la nappe en matériau à base de bois (2') ou du gâteau en fibres de bois (2') au moyen d'au moins une buse d'application (6) entourée par un boîtier (5), **en ce que**
le boîtier (5) repose avec étanchement sur la face supérieure et/ou sur la face inférieure du panneau en matériau à base de bois (2), de la nappe en matériau à base de bois (2') ou du gâteau en fibres de bois (2'), et **en ce que**
une surpression est introduite dans le boîtier (5), moyennant quoi le milieu de traitement pénètre dans le panneau en matériau à base de bois (2), dans la nappe en matériau à base de bois (2') ou dans le gâteau en fibres de bois (2').

6. Procédé selon la revendication 4 ou 5,
**caractérisé en ce que**
le panneau en matériau à base de bois (2) partiellement traité est subdivisé en panneaux rectangulaires individuels.

7. Procédé selon la revendication 4,
**caractérisé en ce que**
un cadre (13) dans lequel sont agencées une pluralité de buses d'application (6) est pressé sur la face supérieure de la nappe en matériau à base de bois (2') ou du gâteau en fibres de bois (2').

8. Procédé selon la revendication 7,
**caractérisé en ce que**
la pluralité de buses d'application (6) sont prévues sur une pluralité de barrettes (14) agencées parallèlement les unes aux autres.

9. Procédé selon la revendication 7,
**caractérisé en ce que**
la nappe en matériau à base de bois (2') ou le gâteau en fibres de bois (2') est soutenu(e) sur sa face inférieure lorsque le cadre (13) est pressé sur la face supérieure.

10. Procédé selon l'une des revendications 7 à 9,
**caractérisé en ce que**
le milieu de traitement sortant sur la face inférieure de la nappe en matériau à base de bois (2') ou du gâteau en fibres de bois (2') est collecté et évacué.

11. Procédé selon la revendication 10,
**caractérisé en ce que**
le milieu de traitement est collecté et évacué au moyen d'une plaque perforée ou d'un tamis.

12. Procédé selon l'une des revendications précédentes,
**caractérisé en ce que**
au moins la face inférieure du panneau en matériau à base de bois (2) est nettoyée après l'injection sous pression du milieu de traitement.

13. Dispositif pour influencer de façon ciblée les propriétés technologiques de zones individuelles d'un panneau en matériau à base de bois (2), comprenant les éléments suivants :
a) une table de travail (1) sur laquelle peut être posé et fixé un panneau en matériau à base de bois (2) ou une nappe en matériau à base de bois (2') pré-compactée ou un gâteau en fibres de bois (2'),
b) un appareil d'application (3) mobile de façon ciblée comportant :
i) un boîtier (5) susceptible d'être étanché par rapport à la surface du panneau en matériau à base de bois (2), de la nappe en matériau à base de bois (2') ou du gâteau de fibres de bois (2'),
ii) au moins une buse d'application (6) agencée dans le boîtier (5) et destinée à appliquer un milieu de traitement sur la surface,
iii) un générateur de pression (11) pour générer une surpression au moyen de laquelle le milieu de traitement peut être injecté sous pression dans le panneau en matériau à base de bois (2), dans la nappe en matériau à base de bois (2') ou dans le gâteau de fibres de bois (2'),
c) le cas échéant une presse pour presser la nappe en matériau à base de bois (2') ou le gâteau en fibres de bois (2'), pour donner un panneau en matériau à base de bois (2) d'une épaisseur désirée.

14. Dispositif selon la revendication 13,
**caractérisé en ce que**
le boîtier (5) présente un joint d'étanchéité (5a) sur son bord tourné vers la surface du panneau en matériau à base de bois (2) ou vers la nappe en matériau à base de bois (2') ou vers le gâteau en fibres de bois (2').

15. Dispositif selon la revendication 13 ou 14,
**caractérisé en ce que**
le générateur de pression (8) est agencé en avant de la buse d'application (6), et le milieu de traitement s'écoule avec surpression à travers la buse d'application (6).

16. Dispositif selon la revendication 13 ou 14,
**caractérisé en ce que**
la pression dans le boîtier (5) qui repose avec étanchement sur le panneau en matériau à base de bois (2), sur la nappe en matériau à base de bois (2') ou sur le gâteau en fibres de bois (2') peut être augmentée par le générateur de pression (11).

17. Dispositif selon la revendication 13,
**caractérisé en ce que**
l'appareil d'application (6) est agencé sur un bras (4) susceptible d'être guidé par-dessus la table de travail (1) dans au moins deux degrés de liberté.

18. Dispositif selon la revendication 13,
**caractérisé en ce que**
le boîtier (5) est en forme de cloche.
